(19) Europäisches Patentamt
European Patent Office
Office européen des brevets

(11) **EP 1 942 085 B1**

(12) **FASCICULE DE BREVET EUROPEEN**

(45) Date de publication et mention
de la délivrance du brevet:
**08.06.2011 Bulletin 2011/23**

(51) Int Cl.:
**C04B 41/60** (2006.01)

(21) Numéro de dépôt: **07290017.8**

(22) Date de dépôt: **08.01.2007**

(54) **Dispositif d'assainissement d'une structure en béton et procédé correspondant**

Vorrichtung zur Sanierung einer Betonstruktur und entsprechendes Verfahren

Device for treating a concrete structure and corresponding method

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.01.2007 FR 0752544**

(43) Date de publication de la demande:
**09.07.2008 Bulletin 2008/28**

(73) Titulaire: **M Lefevre**
**75008 Paris (FR)**

(72) Inventeur: **Menard, Marc-Henry**
**92600 Asnieres (FR)**

(74) Mandataire: **de Kernier, Gabriel**
**Casalonga & Partners**
**Bayerstrasse 71/73**
**80335 München (DE)**

(56) Documents cités:
**EP-A- 1 111 159    US-A1- 2003 173 231**

**Description**

La présente invention concerne un dispositif d'assainissement d'une structure en béton, ainsi que le procédé associé. L'invention concerne notamment un dispositif d'extraction des ions contaminants contenus dans le béton.

Dans les constructions en béton, on utilise de l'acier pour renforcer la résistance à la traction de la construction. Le béton est non seulement résistant à la compression mais protège également l'acier de la corrosion grâce au milieu fortement alcalin qui prévaut dans le béton. En effet, l'alcalinité de l'eau contenue dans les pores du béton permet la formation, sur l'acier, d'une couche d'oxydes ou d'hydroxydes constituant une barrière physique et chimique contre la corrosion. La barrière chimique, appelée réserve d'alcalinité, signifie que la corrosion de l'acier ne se produit pas tant que la quantité d'ions hydroxyles OH- est suffisante.

La quantité d'ions hydroxyles devient par exemple insuffisante lorsque des anions contaminants tels que des chlorures, des carbonates, des nitrates, etc... venant de l'atmosphère ou de l'eau autour du béton, se trouvent en grande quantité en contact avec l'acier noyé dans le béton. Par exemple, le dioxyde de carbone provoque, lorsqu'il pénètre dans le béton, une réaction dite de carbonatation qui diminue le pH de celui-ci : la quantité d'ions hydroxyles peut devenir alors insuffisante. De même, des anions chlorures en grande quantité peuvent dégrader la protection des aciers. La construction en béton commence alors à se dégrader.

De telles détériorations sur les constructions en béton sont en passe de devenir un grave problème économique et technique. Les réparations traditionnelles reposent sur l'enlèvement de la couche de béton dégradé par des contaminants, puis le nettoyage de l'acier avec éventuellement un traitement anti-corrosion, et enfin la coulée ou l'application de nouvelles couches de béton ou de mortier.

Une des caractéristiques de la carbonatation est que le dommage causé est normalement restreint aux zones de surface de la structure, c'est-à-dire à la zone, appelée habituellement enrobage, située entre la surface en contact avec l'atmosphère et le premier lit d'armatures. Cette zone est en général peu épaisse par rapport au reste de la sanction transversale du béton, qui est habituellement non-carbonatée. Ainsi, une autre méthode de traitement du béton consiste a réalcaliniser la zone carbonatée en utilisant un milieu électrolytique externe et un courant électrique capable de reformer des ions hydroxyles autour de l'acier de l'armature.

Il est également possible d'extraire les chlorures en utilisant également un milieu électrolytique externe et un courant électrique, afin de faire migrer les anions loin de l'armature.

On peut ainsi restaurer les propriétés du béton contre la corrosion des armatures.

De telles méthodes ont déjà été décrites dans l'art antérieur, notamment dans les brevets FR 2 729 694, EP 0 200 428 ou encore EP 0 264 421.

Le document EP 1 111 159 concerne un procédé de traitement électrochimique d'un béton précontraint. Le procède comprend la fourniture d'un courant continu entre un élément de précontrainte en acier noyé dans le béton précontraint et servant de cathode, et une anode située sur la surface ou à l'intérieur du béton, à une tension supérieure au potentiel de dégagement d'hydrogène. Selon une première variante, une force de traction effective, agissant sur l'élément de précontrainte en acier pour béton précontraint noyé dans le béton, n'est pas supérieure à 80% de la résistance à la traction de l'élément de précontrainte en acier pour béton précontraint. Selon une deuxième variante, la tension est ajustée à une valeur inférieure au potentiel de dégagement d'hydrogène au moins une fois au cours du traitement électrochimique, après quoi le traitement électrochimique est repris à une tension non inférieure au potentiel de dégagement d'hydrogène, et une force de traction effective agissant sur l'élément de précontrainte en acier pour béton noyé dans le béton n'est pas supérieure à 80% de la résistance à la traction de l'élément de précontrainte en acier pour béton précontraint.

Le but de l'invention est d'améliorer le traitement du béton, notamment en terme de rapidité et d'efficacité.

Selon l'invention, il est proposé un dispositif de traitement d'une structure en béton comprenant au moins une surface accessible et au moins une armature conductrice. Le dispositif comprend une électrode externe prévue pour être disposée en continuité électrique avec la surface accessible de la structure en béton, et une alimentation électrique capable de faire circuler un courant de l'électrode externe vers l'armature conductrice. Le dispositif comprend également un moyen de modulation capable, pendant la durée du traitement de la structure en béton, de moduler, par une fonction périodique sinusoïdale, d'au moins 5% l'intensité du courant circulant de l'électrode externe vers l'armature conductrice.

Le moyen de modulation a pour but de modifier, en fonction du temps, la valeur du courant circulant de l'électrode externe vers l'armature conductrice. En particulier, le moyen de modulation permet de modifier, en fonction du temps, le phénomène d'éloctro-migration des ions dans le béton situé entre l'électrode externe et l'armature conductrice. Le dispositif tient compte en effet, pour réduire la durée et augmenter l'efficacité du traitement, d'une part de la migration due à un champ électrique imposé entre l'électrode externe et l'armature conductrice, et d'autre part de la diffusion naturelle des ions lors de changements de valeur dudit champ électrique. Ainsi, des intervalles de temps sont prévus durant desquels la diffusion naturelle va être favorisée par rapport à l'électro-migration, de manière à réduire la consommation électrique du dispositif et à accélérer le traitement.

Le dispositif selon l'invention permet de gérer à la fois l'électro-migration et la diffusion naturelle pour obtenir un traitement rapide et efficace de la structure en béton.

Selon un mode de réalisation, le dispositif de traitement comprend un système de commande capable de commander l'alimentation électrique.

On considère, dans ce mode de réalisation, que l'alimentation électrique est commandable, c'est-à-dire qu'elle est capable de modifier la grandeur qu'elle impose à l'électrode externe et à l'armature conductrice, par exemple la tension, le courant ou la puissance électrique, en fonction d'un signal de commande extérieur. Le système de commande permet de créer et de transmettre le signal de commande à l'alimentation électrique de manière à modifier, selon les instructions d'un opérateur ou selon un programme mémorisé, la grandeur imposée par l'alimentation électrique à l'électrode externe et à l'armature conductrice.

Ainsi, le moyen de modulation peut être un premier moyen du système de commande, capable de modifier le signal de commande de l'alimentation électrique de manière à moduler l'intensité du courant circulant de l'électrode externe à l'armature conductrice.

Le dispositif de traitement peut comprendre également un électrolyte en contact avec l'électrode externe et la surface accessible de la structure en béton de manière à réaliser la continuité électrique entre l'électrode externe et la surface accessible de la structure en béton, et le système de commande peut comprendre un deuxième moyen capable de modifier le signal de commande de l'alimentation électrique en fonction de la conductivité de l'électrolyte.

La conductivité de l'électrolyte peut être mesurée à l'aide d'une sonde ou évaluée par simulation ou par une cartographie mémorisée par exemple dans le deuxième moyen. A partir de la valeur ainsi déterminée de la conductivité de l'électrolyte, on peut déduire par exemple la quantité d'ions extraits du béton et commander en conséquence l'alimentation électrique. Ainsi, la fin du traitement de la structure en béton peut être décidée, par exemple, lorsque la conductivité de l'électrolyte atteint une certaine valeur prédéfinie.

Le système de commande peut comprendre également un troisième moyen capable de modifier le signal de commande de l'alimentation électrique en fonction de la température de la structure en béton.

Le dispositif de traitement peut comprendre également une électrovanne capable d'augmenter la quantité d'électrolyte. Le système de commande peut comprendre également un moyen de commande de l'électrovanne capable de commander l'électrovanne en fonction de la conductivité de l'électrolyte.

La quantité d'électrolyte désigne ici la quantité de l'électrolyte utilisée pour réaliser la continuité électrique entre l'électrode externe et la surface accessible de la structure en béton. En particulier, le moyen de commande de l'électrovanne peut augmenter la quantité d'électrolyte lorsque la conductivité de ce dernier diminue. L'ajout d'électrolyte a pour but d'éviter une augmentation de la résistance électrique de l'électrolyte notamment suite à des réactions chimiques entre les ions de l'électrolyte et les ions extraits de la structure en béton.

L'invention se rapporte également à un procédé de traitement d'une structure en béton comprenant au moins une surface accessible et au moins une armature conductrice. Selon le procédé, on dispose une électrode externe en continuité électrique avec la surface accessible de la structure en béton, on fait circuler un courant de l'électrode externe vers l'armature conductrice, et on module, par une fonction périodique sinusoïdale, d'au moins 5% l'intensité du courant circulant de l'électrode externe vers l'armature conductrice, pendant la durée du traitement de la structure en béton.

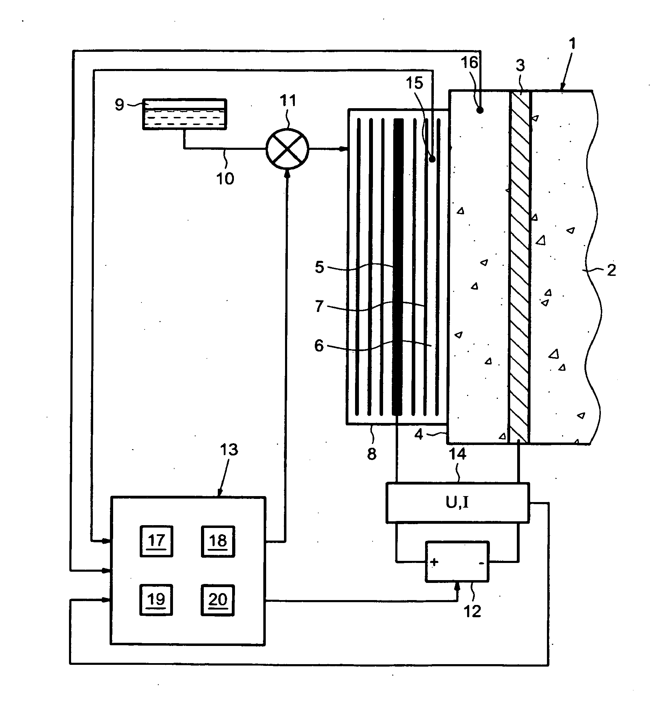

D'autres avantages et caractéristiques apparaîtront à l'examen de la description détaillée d'un mode de réalisation donné à titre d'exemple non limitatif, et de la figure annexée sur laquelle est illustrée une section d'une structure en béton comprenant une armature conductrice et un dispositif de traitement de la structure en béton.

Sur la figure annexée est représentée une section d'une structure en béton 1. La structure en béton 1 comprend du béton 2 et une armature conductrice 3 noyée dans le béton 2. L'armature conductrice 3 joue ici le rôle d'électrode interne.

La structure en béton 1 peut être en béton armé, ou bien encore en béton précontraint dont l'acier est peu sensible à la fragilisation par l'hydrogène naissant. En effet, afin de limiter le risque de rupture de l'acier tendu, par le phénomène de fragilisation par l'hydrogène, on appliquera de préférence le dispositif de traitement d'une structure en béton selon la présente invention à des aciers de précontrainte vérifiés comme étant peu sensibles à la fragilisation par l'hydrogène.

La structure en béton 1 présente par ailleurs une surface accessible 4 sur une partie de laquelle est disposée une électrode externe 5. La surface accessible 4 peut être indifféremment verticale, horizontale, oblique ou gauche. L'électrode externe 5 peut être constituée de fils, de câbles, de tresses, d'un treillis, de plaques, de feuilles, de plastiques conducteurs ou de tout autres matériaux conducteurs. Un électrolyte 6 est monté en contact électrique avec l'électrode externe 5 et avec la surface accessible 4, de manière à ce que l'électrode externe 5 soit en continuité électrique avec la surface accessible 4 par l'intermédiaire de l'électrolyte 6. L'électrode externe 5 peut ainsi être placée dans l'électrolyte 6.

L'électrolyte 6 peut comprendre, par exemple, une solution d'eau éventuellement additionnée d'adjuvants ou une solution aqueuse de sels de calcium, de sodium, de lithium et/ou de potassium. L'électrolyte 6 est choisi de préférence de manière à présenter une conductivité électrique élevée, et est de préférence basique pour traiter le béton carbonaté. L'électrolyte 6 peut être sous forme liquide, sous la forme d'un gel ou bien encore absorbée dans un milieu poreux tel que de la laine de roche, de la cellulose, de la sciure, du sable, de l'argile ou un matériau similaire. L'électrolyte peut aussi être un béton, mortier ou une pâte à base de ciment à condition que la prise du ciment soit fortement retardée par une substance telle que le sucre.

Le milieu poreux est choisi de manière à permettre la rétention de l'électrolyte 6 sans gêner le fonctionnement du dispositif de traitement de la structure en béton. On considère, pour la suite de la description, que l'électrolyte 6 est absorbée dans un milieu poreux constitué par exemple de plusieurs feutres 7 placés dans un caisson 8 fixé, par exemple par des pattes, à la surface accessible 4 de la structure en béton 1. L'électrode externe 5 est également placée dans le caisson 8, de manière à être en continuité électrique avec la surface accessible 4 par l'intermédiaire des feutres 7. En particulier, le caisson 8 et les feutres 7 pourront être réutilisés, à l'exception éventuellement du feutre positionné le plus à proximité de la surface accessible 4, afin de limiter les pollutions de l'environnement.

Le dispositif de traitement de la structure en béton comprend également un réservoir d'électrolyte 9, relié au caisson 8 par une conduite 10 comportant une électrovanne 11. La commande de l'électrovanne 11 permet d'ajouter une quantité souhaitée d'électrolyte dans le caisson 8, notamment lorsque la conductivité de l'électrolyte 6 diminue.

Une alimentation électrique 12 est utilisée pour faire circuler un courant électrique de l'électrode externe 5 vers l'armature conductrice 3. L'alimentation électrique 12 peut être par exemple un générateur de courant qui fait circuler un courant d'intensité I, en appliquant une tension U suffisante entre l'électrode externe 5 et l'armature conductrice 3. L'alimentation électrique 12 peut être commandée par un signal de commande, par exemple une tension de commande, qui détermine l'intensité du courant à faire circuler de l'électrode externe 5 vers l'armature conductrice 3.

L'électrode externe 5 est reliée électriquement à la borne positive de l'alimentation électrique 12 et constitue donc l'anode, tandis que l'armature conductrice 3 est relié à la borne négative de l'alimentation électrique 12 et constitue donc la cathode.

Lorsque l'alimentation électrique 12 est mise en fonctionnement, les anions contenus dans le béton 2 migrent vers la surface accessible 4 sous l'effet du champ électrique créé entre l'électrode externe 5 et l'armature conductrice 3, puis vont passer dans l'électrolyte 6, tandis que les cations contenus dans l'électrolyte 6 vont migrer dans le béton 2. L'électrolyte peut pénétrer dans le béton notamment par électro-osmose. Il est ainsi possible d'extraire du béton 2 les anions contaminants susceptibles de causer une corrosion de l'armature conductrice 3. Par ailleurs, un électrolyte basique peut rétablir, dans la zone carbonatée du béton 2, l'alcalinité qui permet notamment de protéger l'armature conductrice 3 contre la corrosion.

Le dispositif comprend également un système de commande 13. Le système de commande 13 permet notamment d'imposer la tension de commande de l'alimentation électrique 12 de manière à contrôler l'intensité du courant circulant entre l'électrode externe 5 et l'armature conductrice 3. Le système de commande 13 peut également commander l'électrovanne 11 de manière à ajouter, si nécessaire, de l'électrolyte 6 dans le caisson 8 afin d'améliorer le continuité électrique entre l'électrode externe 5 et la surface accessible 4.

Le système de commande 13 peut commander l'alimentation électrique 12 ou l'électrovanne 11 à partir de valeurs fournies, par exemple, par des sondes. Ainsi, le dispositif de traitement de la structure en béton peut comprendre par exemple une sonde 14 mesurant l'intensité 1 du courant et/ou la tension U appliquée par l'alimentation électrique 12 entre l'électrode externe 5 et l'armature conductrice 3, une sonde 15 de mesure de la conductivité de l'électrolyte 6, une sonde 16 de mesure de la température du béton 2, ou bien encore une sonde (non-représentée) de mesure de la température atmosphérique.

Cependant, le système de commande 13 peut également commander l'alimentation électrique 12 et l'électrovanne 11 à partir de valeurs obtenues par simulation, à partir d'autres grandeurs mesurées, ou à partir d'une cartographie mémorisée dans le système de commande 13 par exemple.

Afin de contrôler le procédé de traitement, le système de commande 13 comprend un premier moyen 17 capable, pendant la durée du traitement, de moduler l'intensité 1 du courant circulant de l'électrode externe 5 vers l'armature conductrice 3. La modulation du courant créée par le premier moyen 17 est indépendante de la régulation imposée par l'alimentation électrique 12. En particulier, dans le cas présent, lorsque la tension de commande de l'alimentation électrique 12 est constante, l'alimentation électrique 12 est un générateur de courant dont la tension U varie en fonction du temps, par régulation, de manière à imposer un courant constant correspondant. Les variations de courant dues à des modifications de propriétés électriques, par exemple dans l'électrolyte 6 ou dans le béton 2, sont normalement corrigées par la régulation de l'alimentation électrique 12 et ne sont, en conséquence, pas considérées comme des modulations de l'intensité du courant selon la présente description.

Le premier moyen 17 permet notamment de modifier la tension de commande de l'alimentation électrique 12 de manière à obtenir une modulation de l'intensité 1 du courant circulant dans le béton 2. L'intensité 1 du courant circulant de l'électrode externe 5 vers l'armature conductrice 3 peut alors, par exemple, s'écrire sous la forme (1) :

$$I = I_{moy} + I_A.f(t) = I_{moy}.\left[1 + \frac{I_A}{I_{moy}}.f(t)\right] \qquad\qquad (1)$$

où : $I_{moy}$ est l'intensité moyenne du courant,

$I_A$ est l'amplitude de la modulation et

f(t) est une fonction du temps variant dans l'intervalle -1 et 1, sans en atteindre forcément les bornes, et de valeur moyenne nulle (comme par exemple la fonction cosinus).

On appellera indice de modulation le rapport : $I_A/I_{moy}$, l'indice de modulation étant une valeur comprise entre 0 et 1. L'indice de modulation correspond au pourcentage d'amplitude de la modulation et la fonction f(t) détermine la variation temporelle de la modulation.

$I_A$ et f(t) sont déterminées à partir de la tension de commande de l'alimentation électrique 12.

Selon les cas, la modulation de l'intensité I du courant circulant dans le béton 2 pourra être supérieure ou égale à 5%, 20%, 50% ou 70%, et préférentiellement égale à 100%. Autrement dit, l'indice de modulation pourra être supérieur ou régal à 0,05, 0,2, 0,5 ou 0,7, et préférentiellement égal à 1. La fonction f(t) est une fonction périodique sinusoidale.

La modulation du courant circulant dans le béton 2 permet de modifier l'électro-migration des ions entre l'électrode externe. 5 et l'armature conductrice 3. En particulier, une intensité de courant élevée favorisera l'électro-migration de ions, tandis qu'une intensité de courant faible, voire nulle, favorisera la diffusion naturelle des ions dans le béton.

Ainsi, lorsqu'on applique un champ électrique entre l'armature conductrice 3 et l'électrode externe 5, les ions migrent et leur distribution initiale dans le béton s'en trouve modifiée. Toutefois, si les conditions de traitement restent stationnaires, la distribution des ions dans l'épaisseur du béton trend à se stabiliser et crée un gradient de concentration artificiel dû au champ électrique appliqué. Le système est alors dans un état d'équilibre.

Une modification des conditions de traitement, notamment une coupure du courant, entraîne un nouvel état d'équilibre. La diffusion des ions, notamment à cause du gradient de concentration dû au champ électrique précédemment appliqué, permet alors d'établir une nouvelle distribution des ions dans le béton 2 correspondant à un nouvel état d'équilibre.

Ainsi, l'utilisation alternée de l'électro-migration et de la diffusion naturelle pour déplacer les ions dans le béton 2 permet de diminuer la puissance électrique utilisée, et de réduire le temps de traitement de la structure en béton 1.

Le système de commande 13 comprend également un deuxième moyen 18 capable de modifier la tension de commande de l'alimentation électrique 12 en fonction de la conductivité de l'électrolyte 6 mesurée par la sonde 15. En effet, il est possible de déterminer la fin du traitement de la structure en béton 1 à partir de l'évolution de la conductivité de l'électrolyte 6. Ainsi, le deuxième moyen 18 peut commander l'alimentation électrique 12 de manière à l'arrêter lorsque la conductivité de l'électrolyte 6 atteint par exemple un palier.

Il est cependant également possible d'arrêter le traitement à partir du calcul de la charge totale extraite du béton 2, par exemple en intégrant par rapport au temps, la mesure du courant circulant dans le béton 2.

Le système de commande 13 peut également comprendre un troisième moyen 19 capable de modifier la tension de commande de l'alimentation électrique 12 en fonction de la température du béton 2 mesurée par la sonde 16, et éventuellement en fonction de la température atmosphérique. En particulier, on peut adapter le traitement de la structure en béton en fonction des conditions extérieures.

Enfin, le système de commande 13 peut comprendre un moyen 20 de commande de l'électrovanne, capable d'ajouter de l'électrolyte dans le caisson 8 en fonction d'une cartographie mémorisée, ou bien en fonction de la conductivité de l'électrolyte 6 mesurée par la sonde 15. Ainsi, le moyen 20 de commande de l'électrovanne peut commander l'ouverture de l'électrovanne 11 de manière à ajouter une quantité d'électrolyte définie, lorsque la conductivité de l'électrolyte 6 mesurée par la sonde 15 diminue en fonction du temps.

Ainsi, le dispositif selon l'invention permet de traiter plus rapidement et en utilisant moins d'énergie électrique, une structure en béton dont une partie est carbonatée. En particulier, le dispositif selon l'invention exploite, en plus de l'électro-migration, la diffusion naturelle des ions dans le béton pour accélérer leur extraction. Pour cela, le courant circulant dans la structure en béton est modulé en fonction du temps.

**Revendications**

**1.** Dispositif de traitement d'une structure en béton (1) comprenant au moins une surface accessible (4) et au moins une armature conductrice (3), le dispositif comprenant une électrode externe (5) prévue pour être disposée en continuité électrique avec la surface accessible (4) de la structure en béton (1) et une alimentation électrique (12) capable de faire circule un courant de l'électrode externe (5) vers l'armature conductrice (3), **caractérisé en ce**

**que** le dispositif comprend également un moyen de modulation capable, pendant la durée du traitement de la structure en béton (1), de moduler, par une fonction périodique sinusoïdale, d'au moins 5% l'intensité du courant circulant de l'électrode externe (5) vers l'armature conductrice (3).

2. Dispositif selon la revendication 1 comprenant également un système de commande (13) capable de commander l'alimentation électrique (12).

3. Dispositif selon la revendication 2 dans lequel le moyen de modulation est un premier moyen (17) du système de commande (13) capable de modifier le signal de commande de l'alimentation électrique (12) de manière à moduler l'intensité du courant circulant de l'électrode externe (5) vers l'armature conductrice (3).

4. Dispositif selon la revendication 3 comprenant également un électrolyte (6) en contact avec l'électrode externe (5) et la surface accessible (4) de la structure en béton (1) de manière à réaliser le continuité électrique entre l'électrode externe (5) et la surface accessible (4) de la structure en béton (1), et un deuxième moyen (18) du système de commande (13) capable de modifier le signal de commande de l'alimentation électrique (12) en fonction de la conductivité de l'électrolyte (6).

5. Dispositif selon la revendication 4 comprenant également un troisième moyen (19) du système de commande (13) capable de modifier le signal de commande de l'alimentation électrique (12) en fonction de la température de la structure en béton (1).

6. Dispositif selon la revendication 4 ou 5 comprenant également une électrovanne (11) capable d'augmenter la quantité d'électrolyte et dans lequel le système de commande (13) comprend également un moyen (20) de commande de l'électrovanne capable de commander l'électrovanne (11) en fonction de la conductivité de l'électrolyte (6).

7. Procédé de traitement d'une structure en béton (1) comprenant au moins une surface accessible (4) et au moins une armature conductrice (3), dans lequel on dispose une électrode externe (5) en continuité électrique avec la surface accessible (4) de la structure en béton (1) et on fait circuler un courant de l'électrode externe (5) vers l'armature conductrice (3),
**caractérisé en ce qu'**on module, par une fonction périodique sinusoïdale, d'au moins 5% l'intensité du courant circulant de l'électrode externe (5) vers l'armature conductrice (3), pendant la durée du traitement de la structure en béton (1).

## Claims

1. Device for treating a concrete structure (1) comprising at least one accessible surface (4) and at least one conductive reinforcement (3), the device comprising an external electrode (5) designed to be arranged in electrical continuity with the accessible surface (4) of the concrete structure (1) and an electrical power supply (12) capable of making a current from the external electrode (5) flow towards the conductive reinforcement (3),
**characterized in that** the device also comprises a modulation means capable, throughout the duration of the treatment of the concrete structure (1), of modulating, by a periodic sinusoidal function, by at least 5%, the intensity of the current flowing from the external electrode (5) towards the conductive reinforcement (3).

2. Device according to Claim 1, also comprising a control system (13) capable of controlling the electrical power supply (12).

3. Device according to Claim 2, in which the modulation means is a first means (17) of the control system (13) capable of modifying the control signal for the electrical power supply (12) so as to modulate the intensity of the current flowing from the external electrode (5) towards the conductive reinforcement (3).

4. Device according to Claim 3, also comprising an electrolyte (6) in contact with the external electrode (5) and the accessible surface (4) of the concrete structure (1) so as to produce the electrical continuity between the external electrode (5) and the accessible surface (4) of the concrete structure (1), and a second means (18) of the control system (13) capable of modifying the control signal for the electrical power supply (12) according to the conductivity of the electrolyte (6).

5. Device according to Claim 4, also comprising a third means (19) of the control system (13) capable of modifying the control signal for the electrical power supply (12) according to the temperature of the concrete structure (1).

6. Device according to Claim 4 or 5, also comprising a solenoid valve (11) capable of increasing the quantity of electrolyte and in which the control system (13) also comprises a means (20) of controlling the solenoid valve capable of controlling the solenoid valve (11) according to the conductivity of the electrolyte (6).

7. Method for treating a concrete structure (1) comprising at least one accessible surface (4) and at least one conductive reinforcement (3), in which an external electrode (5) is arranged in electrical continuity with the accessible surface (4) of the concrete structure (1) and a current is made to flow from the external electrode (5) towards the conductive reinforcement (3),
**characterized in that** a periodic sinusoidal function is used to modulate, by at least 5%, the intensity of the current flowing from the external electrode (5) towards the conductive reinforcement (3), throughout the duration of the treatment of the concrete structure (1).

## Patentansprüche

1. Vorrichtung zum Bearbeiten einer Betonstruktur (1), die wenigstens eine zugängliche Oberfläche (4) und wenigstens eine leitende Bewehrung (3) besitzt, wobei die Vorrichtung eine externe Elektrode (5), die vorgesehen ist, um in elektrischer Verbindung mit der zugänglichen Oberfläche (4) der Betonstruktur (1) angeordnet zu werden, und eine Stromversorgung (12), die einen Strom von der externen Elektrode (5) zu der leitenden Bewehrung (3) schicken kann, enthält,
**dadurch gekennzeichnet, dass** die Vorrichtung außerdem ein Modulationsmittel enthält, das während der Dauer der Bearbeitung der Betonstruktur (1) durch eine periodische Sinusfunktion wenigstens 5 % der Stärke des Stroms, der von der externen Elektrode (5) zu der leitenden Bewehrung (3) fließt, modulieren kann.

2. Vorrichtung nach Anspruch 1, die außerdem ein Steuersystem (13) enthält, das die Stromversorgung (12) steuern kann.

3. Vorrichtung nach Anspruch 2, wobei das Modulationsmittel ein erstes Mittel (17) des Steuersystems (13) ist, das das Steuersignal der Stromversorgung (12) in der Weise modifizieren kann, dass die Stärke des Stroms, der von der externen Elektrode (5) zu der leitenden Bewehrung (3) fließt, moduliert wird.

4. Vorrichtung nach Anspruch 3, die außerdem einen Elektrolyt (6) in Kontakt mit der externen Elektrode (5) und der zugänglichen Oberfläche (4) der Betonstruktur (1) enthält, derart, dass die elektrische Verbindung zwischen der externen Elektrode (5) und der zugänglichen Oberfläche (4) der Betonstruktur (1) verwirklicht wird, und ein zweites Mittel (18) des Steuersystems (13) enthält, das das Steuersignal der Stromversorgung (12) als Funktion der spezifischen Leitfähigkeit des Elektrolyts (6) modifizieren kann.

5. Vorrichtung nach Anspruch 4, die außerdem ein drittes Mittel (19) des Steuersystems (13) enthält, das das Steuersignal der Stromversorgung (12) als Funktion der Temperatur der Betonstruktur (1) modifizieren kann.

6. Vorrichtung nach Anspruch 4 oder 5, die außerdem ein Elektroventil (11) enthält, das die Menge des Elektrolyts erhöhen kann, wobei das Steuersystem (13) außerdem ein Mittel (20) zum Steuern des Elektroventils enthält, das das Elektroventil (11) als Funktion der spezifischen Leitfähigkeit des Elektrolyts (6) steuern kann.

7. Verfahren zum Bearbeiten einer Betonstruktur (1), die wenigstens eine zugängliche Oberfläche (4) und wenigstens eine leitende Bewehrung (3) enthält, wobei eine externe Elektrode (5) in elektrischer Verbindung mit der zugänglichen Oberfläche (4) der Betonstruktur (1) angeordnet wird und ein Strom von der externen Elektrode (5) zu der leitenden Bewehrung (3) geschickt wird, **dadurch gekennzeichnet, dass** während der Dauer der Bearbeitung der Betonstruktur (1) durch eine periodische Sinusfunktion wenigstens 5 % der Stärke des Stroms, der von der externen Elektrode (5) zu der leitenden Bewehrung (3) fließt, moduliert werden.

**EP 1 942 085 B1**

## RÉFÉRENCES CITÉES DANS LA DESCRIPTION

**Documents brevets cités dans la description**

- FR 2729694
- EP 0200428 A
- EP 0264421 A
- EP 1111159 A